# EUROPEAN PATENT SPECIFICATION

(11) **EP 3 212 994 B1**
(45) Date of publication and mention of the grant of the patent: **05.05.2021**
(21) Application number: 15788487.5
(22) Date of filing: 26.10.2015
(51) Int. Cl.: B60Q 1/26, F21S 43/14, F21S 43/20, F21S 43/31, F21S 43/40

(54) **A LAMP ASSEMBLY FOR A VEHICLE**
BELEUCHTUNG FÜR KFZ
DISPOSITIF D'ÉCLAIRAGE POUR VÉHICULE

(30) Priority: 27.10.2014 AU 2014904288
(43) Date of publication of application: 06.09.2017
(73) Proprietor: SMR Patents S.à.r.l., 2453 Luxembourg (LU)
(72) Inventor: FIMERI, Garry Gordon Leslie, Adelaide, South Australia 5162 (AU); BELCHER, Simon, South Plympton, South Australia 5038 (AU); DICKSON, James Nicholas, Glen Osmond, South Australia 5064 (AU)
(74) Representative: Weber-Bruls, Dorothée
(86) International application number: PCT/IB2015/058231
(87) International publication number: WO 2016/067175

(56) References cited:
- EP-A1- 0 678 703
- EP-A2- 0 942 225
- EP-A2- 0 974 485
- EP-A2- 1 258 394
- EP-A2- 1 355 108
- EP-A2- 1 411 291
- DE-A1- 10 239 839
- FR-A1- 2 785 973
- US-A1- 2003 035 299
- US-A1- 2009 027 911
- US-A1- 2011 058 357
- US-A1- 2012 170 296

## Description

The present invention relates to lamp assemblies according to the preamble of claim 1. In a particular form the present invention relates to lamp assemblies for an exterior rear view mirror assembly of a vehicle.

Automotive lighting arrangements are increasingly being used in vehicle side mirrors (exterior rear view mirror assemblies) as value added features required by automotive manufacturers. An example of this is mirror assemblies that are manufactured with turn signal indicator (STI) lights. Light emitting diodes (LEDs) are also being used more frequently as the light source in these lighting arrangements. In addition to the functionality of these lighting systems, another important design consideration is the aesthetic appearance of the light output from these systems.

In particular, it is desirable to provide a lighting arrangement using one or more LED light sources that is able to provide an output having an even (uniform or homogenous) area luminance). This is difficult to achieve as an LED light source is inherently directional (with an approximate Lambertian distribution) meaning that the relative luminous intensity of the LED varies away from the central axis of the LED. The luminous intensity is highest at 0° (along central axis) and drops off significantly as the viewing angle approaches 90°. Because of this, a lighting arrangement using a series of LED light sources tends to create a series of "hot spots" (or conversely dark regions) that are visible to an external viewer of the lighting arrangement. In other words, the light output is not of even intensity across a particular viewing surface.

One method of obtaining a light output over a surface having substantially uniform luminous intensity using one or more LED light sources is to use a dedicated light pipe that receives light from the LED light source(s) and directs it towards a targeted output surface (usually by using a range of optical surfaces-surface defects, etches, shaped optics etc). While a light pipe could be used, this solution may not be cost feasible due to the cost associated in manufacturing the light pipe.

A vehicle lamp known from EP 1 411 291 A2 includes a set of first reflection surfaces that reflect the light emitted by a first diode toward a lamp lens, and a set of second reflection surfaces that reflect light emitted by a second diode toward the lamp lens. The first reflection surfaces and the second reflection surfaces are alternately provided in the path of the light that is reflected from the lamp lens. Each of the first reflection surface is a part of a rotational paraboloid having a focus on a light emission source of the first diode such that the paraboloids corresponding to the first reflection surfaces that are farther from the first diode have longer focal lengths. Each of the second reflection surface is a part of a rotational paraboloid having a focus on a light emission source of the second diode such that the paraboloids corresponding to the second reflection surfaces that are farther from the second diode have longer focal lengths. Several reflection surfaces that reflect light emitted by diodes respectively towards the lamp lens, are alternately provided in the path of the light that is reflected from the lens. Each of the reflection surfaces is a portion of rotational paraboloid such that the paraboloids corresponding to respective reflective surfaces that are farther from respective diodes, have longer focal lengths.

EP 1 258 394 A2 discloses a lighting device, particularly a motor vehicle light, comprising a primary reflector composed of a hollow body that defines a pair of pointed elements, which face opposite directions, between which a luminous source is placed; and a secondary reflector composed of an elongated element with steps, at whose center the primary reflector is placed with its relative pointed elements facing the steps.

A vehicular lamp is described in US 2003/035299, radiates a light by indirect illumination using a plurality of LED light sources and has a thin structure while providing sufficient light output to the front of the lamp, even in the case where the lamp is mounted in a wrap-around portion of the vehicle body. Respective Fresnel lenses which form light from respective LED light sources into parallel light fluxes are arranged so as to align the directions of the parallel light fluxes upward, and the parallel light fluxes are then reflected toward the front of the lamp by a reflector. The reflector is separated into sub-reflectors for every area which the parallel light fluxes from the respective Fresnel lenses strike, and the sub-reflectors are arranged in a stepped configuration extending in a lateral direction of the reflector from the front of the lamp toward the rear of the lamp. Accordingly, it is possible to form the reflector so as to wrap around to the rear of the lamp while the reflected light from the respective sub-reflectors is radiated toward the front of the lamp.

From EP 0 678 703 A1 a light for motor vehicles is known which comprises a container body containing one or more reflectors defining specialized sectors having specific functions, each reflector having at least one incandescent lamp associated with a lamp holder, the reflector cooperating at its front with an outer transparent element, the reflector being defined by a plurality of concave or convex reflecting areas distributed substantially evenly on a surface of the reflector, the reflecting areas being visible through the outer smooth transparent element as a mated plurality of apparent luminous images.

EP 1 355 108 A2 discloses a lighting device for motor vehicles comprising a light source and an end cover having at least a first section and a second section. The lighting device further comprises a first reflector, which directs light emitted by the light source on to the end cover. A first optically active element is arranged in the ray path between the light source and the first reflector and deflects the light rays emitted by the light source, so that the deflected rays strike the first reflector at an angle of incidence, the associated angle of reflection of which causes the rays from the first reflector to be directed at least substantially on to the second section of the end cover.

From US 2009/0027911 A1 a vehicular lamp is known which is characterized by a lens having a first light source, a second light source, a front light emitting face, a side end face to which the first light source is opposed, and a rear face, wherein the rear face includes a lens having pluralities of reflecting portions and transmitting portions consecutively aligned alternately in a direction of being remote from the side end face, and a reflecting face arranged on a rear side of the lens, light of the first light source is incident on the lens from the side end face of the lens, reflected by an interface of the reflecting portion, thereafter, radiated from the front light emitting face, and light of the second light source is reflected by the reflecting portion, thereafter, incident on the lens from the transmitting portion and radiated from the front light emitting face.

FR 2 785 973 discloses a signal light comprising an elongated body assembly that is internally reflective and is shaped such that the light beams from the light source illuminate the entire body assembly. Thus from the singular light source, a large signal assembly is illuminated.

DE 102 39 839 A1 describes a signal lamp which is accommodated in the housing for the external rear view mirror. It has a housing with grooved edges which hold a refracting lens. A holder strip and an inner strip support a row of LED's. The LED's face toward a reflector with a corrugated surface, adjacent to the wall of the housing.

From EP 0 974 485 A2 a signal lamp for a vehicle is known which is composed of a plurality of LED lamps as a light source, a reflecting surface corresponding to the light-emitting surface of the signal lamp, a housing for accommodating the LED lamps and the reflecting surface, and an outer lens disposed in opposing relation to the reflecting surface. The LED lamps are arranged along the periphery of the light-emitting surface such that the illuminating direction thereof is toward the center of the reflecting surface. The reflecting surface is partitioned into segments corresponding in number to the LED lamps. Preferably, the reflecting surface has a circular configuration. The segments into which the reflecting surface is partitioned are arranged radially around the center of the reflecting surface. In this case, the LED lamps are arranged in an annular configuration along the periphery of the reflecting surface. A shade for blocking direct light beams from the LED lamps is provided adjacent the LED lamps.

EP 0 942 225 A2 discloses a vehicle signal lighting unit which includes a light source, a plain outer lens, and a composite reflecting mirror consisting of a unit reflecting surface which reflects light having desired light distribution characteristics from the light source. The light source emits no direct light in an illuminating direction of the vehicle signal lighting unit, and is positioned to allow incident light against said composite reflecting mirror from at least two directions, and to prevent direct observation of the light source itself through the outer lens. Each unit reflecting surface of said composite reflecting mirror includes reflecting surface which reflects light from the light source from said two directions. Since the light source is provided outside an effective luminescent surface, the light source cannot be observed directly from outside through the plain outer lens. The light source can be mounted on both ends of the lighting unit outside an effective luminescent surface. The outer lens side of the light source can be provided with a hood member for preventing observation of the light source itself.

US 2011/0058357 A1 describes a merchandiser that includes a case that defines a product display area and that includes a frame having mullions. The mullions define at least one opening such that the food product within the product display area is accessible from the front of the case. The merchandiser also includes at least one shelf for supporting and displaying food product within the product display area, and a light assembly that is coupled to at least one of the mullions and that is positioned to illuminate the food product. The light assembly includes a first LED that has a first viewing angle and a second LED that has a second viewing angle that is smaller than the first viewing angle.

US 2012/0170296 A1 discloses a rear automotive lamp assembly which is provided replicating the appearance of a plurality of distinct illumination sources, such as light emitting diodes. The lamp assembly having a light source, at least one reflector, the reflectors having reflective surfaces, the reflective surfaces operable to reflect light from the light source. The reflectors spaced apart and oriented such that light rays from the light source are incident to each of the reflective surfaces are reflected towards a viewing direction. A shield further disposed between the light source and the reflective surface of the reflector. The shield including a plurality of open sections or cutouts thereby allowing a generally collimated light beam from the light source to shine on the reflective surface such that each of the reflective surfaces of the at least one reflector appears as a distinct illumination source from the viewing direction. The openings vary in size and dimension along the length of the shield.

It is the object of the present invention to further develop the known lamp assembly to overcome the drawbacks of the prior art. That is, there is a need to provide a useful alternative to using a light pipe in a lighting arrangement that provides a light output over a surface having substantially uniform luminous intensity using one or more LED light sources. This object is solved by the features of the characterizing portion of claim 1. The sub claims 2 to 6 describe preferred embodiments of the lamp assembly of the invention. Further, the object is solved by an exterior rear view mirror assembly with such a lamp assembly in line with claims 7 and 8.

Other advantages of the present invention will become apparent from the following description, taken in connection with the accompanying drawings, wherein, by way of illustration and example, a preferred embodiment of the present invention is disclosed. According to a first aspect of the invention, there is provided a lamp assembly for a vehicle including: a reflector having a proximal end and a distal end, the reflector having a surface having a plurality of reflective faces spread over an arc there between, the arc being generally concave, the reflector forming part of a recess, the recess having spaced-apart parallel walls; a light emitting diode (LED) light source disposed near the proximal end of the reflector and remote from the distal end of the reflector, the light source oriented to emit light onto the reflective faces; and a lens positioned in front of the reflector, the lens arranged to receive light from the reflector and having an inner surface, whereby, in use, light is output from the lens with a substantially uniform luminance over a viewing angle of at least 45 degrees in a plane. The plane is a horizontal plane. The inner surface includes surface optics to diffuse light incident upon the lens. The surface optics include a waveform structure consisting of a plurality of peaks and troughs, the peaks and troughs being orientated substantially perpendicular to the walls of the recess. The peaks and troughs are orientated substantially parallel to the reflective faces of the reflector.

The spaced apart parallel walls of the recess are reflective, in use concentrating the light output from the reflector in a vertical plane.

Each of the reflective faces have a curved surface configured to spread light towards the inner surface of the lens in a horizontal plane.

The curvature of each of the reflective faces is arranged to spread light over a majority of the inner surface of the lens such that the light reflected from the reflective faces overlaps.

According to a further aspect, there is provided a lamp assembly for a vehicle including: a first reflector having a proximal end and a distal end, the reflector having a surface having a plurality of first reflective faces spread over an arc therebetween, the arc being generally concave, the reflector forming part of a first recess, the recess having a first pair of spaced-apart parallel walls; a first light emitting diode (LED) light source disposed near the proximal end of the first reflector and remote from the distal end of the first reflector, the first light source oriented to emit light onto the first reflective faces; a second reflector having a proximal end and a distal end, the surface having a plurality of second reflective faces spread over an arc there between, the arc being generally concave, the reflector forming part of a second recess, the recess having a second pair of spaced-apart parallel walls; a second light emitting diode (LED) light source disposed near the proximal end of the second reflector and remote from the distal end of the second reflector, the second light source oriented to emit light onto the second reflective faces; and a lens positioned in front of the first and second reflectors, the lens arranged to receive light from the reflectors and having an inner surface, whereby, in use, light is output from the lens with a substantially uniform luminance over a viewing angle of at least 45 degrees in a plane. The plane is a horizontal plane. The inner surface includes surface optics to diffuse light incident upon the lens. The surface optics include a waveform structure consisting of a plurality of peaks and troughs, the peaks and troughs being orientated substantially perpendicular to the walls of the recess. The peaks and troughs are orientated substantially parallel to the reflective faces of the reflector.

The first and second reflectors are integral, the first and second reflectors converging together from their respective proximal ends to their respective distal ends.

The spaced apart parallel walls of the recess are reflective, in use concentrating the light output from the reflector in a vertical plane.

Each of the first reflective faces have a curved surface configured to spread light towards a first portion of the inner surface of the lens in a horizontal plane. In one form, the curvature of each of the first reflective faces is arranged to spread light over a majority of the first portion of the inner surface of the lens such that the light reflected from the first reflective faces overlaps.

Embodiments of the present invention will be discussed with reference to the accompanying drawings wherein:
- Figure 1: is a side view of a lamp assembly for a vehicle;
- Figure 2: is a sectional view of the lamp assembly taken through section A-A of Figure 1;
- Figure 3: is a sectional view of the lamp assembly taken through section B-B of Figure 2;
- Figure 4: is a side view of the lamp assembly of Figure 1 with lens removed;
- Figure 5: is a sectional view of the lamp assembly taken through section D-D of Figure 4;
- Figures 6a-6b: provide enlarged views of the detail at E and F in Figure 5 showing the structure of reflective facets of the clearance light reflector and the path of some light rays being reflected by the reflective facets;
- Figure 7: is a rear perspective view of the lens showing surface optics on the inner surface of the lens;
- Figure 8: provides an enlarged view of the detail at I in Figure 7 showing in more detail the surface optics on the inner surface of the lens for the clearance light;
- Figure 9: is a top view of an exterior rear view mirror assembly mounted to a side door of a vehicle that is integrated with the lamp assembly;
- Figure 10: is a perspective view of a portion of the exterior rear view mirror assembly of Figure 9; and
- Figure 11: is a sectional view of the lamp assembly similar to that of Figure 5, but shows the overlapping light spread over the inner surface of the lens. [0036] In the following description, like reference characters designate like or corresponding parts throughout the figures.

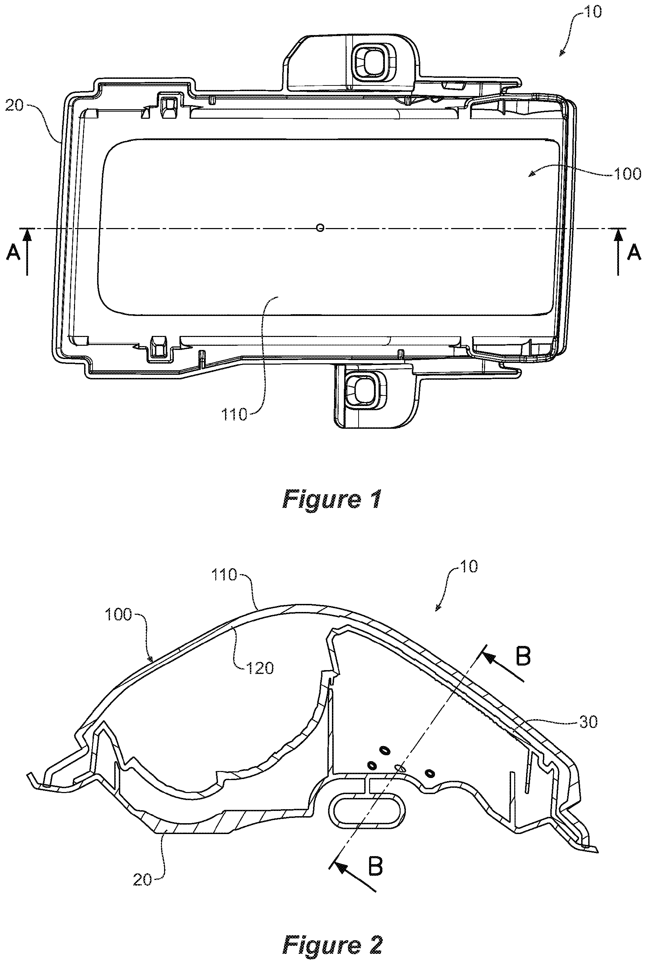

Referring now to Figure 1, there is shown a lamp assembly 10 for a vehicle. The lamp assembly may be integrated into an exterior rear view mirror (side mirror) assembly of a vehicle. In one form, the lamp assembly provides a clearance light configured to provide light output generally forward of the vehicle to provide a visual indication to oncoming traffic as to the width of the vehicle (the lamp assembly 10 is preferably installed in both a left and a right hand side mirror of the vehicle for this purpose).

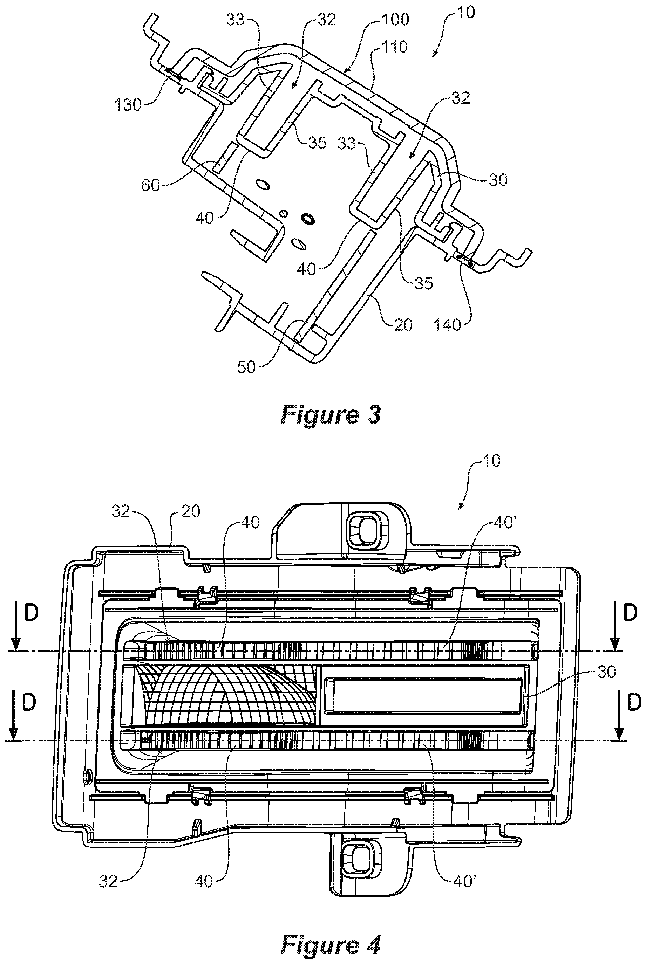

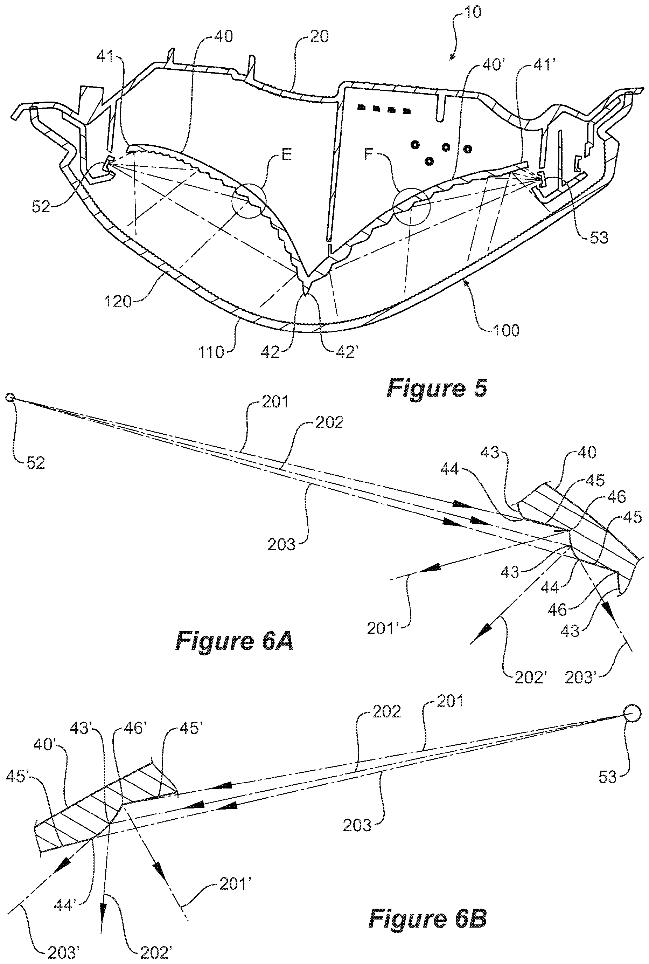

Referring to Figures 3, 4, 5, 6A and 6B, the lamp assembly 10 includes a reflector 40 having a proximal end 41 and a distal end 42, the surface having a plurality of reflective faces spread over an arc there between, the arc being generally concave, the reflector forming part of a recess 32, the recess 32 having spaced-apart parallel walls 33, 35. A a light emitting diode (LED) light source 52 is disposed near the proximal end 41 of the reflector and remote from the distal end 42 of the reflector. The light source 52 is oriented to emit light onto the reflective faces 43 as is most clearly shown in Figures 6A and 6B. A lens 100 is positioned in front of the reflector 40. The lens 100 is arranged to receive light from the reflector 40 and has an inner surface 120. In use, light is output from the lens 100 with a substantially uniform luminance over a viewing angle of at least 45 degrees in a plane.

The lamp assembly 10 has a housing 20, a reflective moulding 30 mounted into the housing (see Figure 2) and a lens 100 external to the housing covering the reflective moulding 30. The lens 100 is connected or joined to the housing 20 (e.g. by welding-see attachment points 130, 140 in Figure 3) and has an inner surface 120 and an outer surface 110 which provides a viewing surface that is illuminated by the lamp assembly 10 in use. The reflective moulding 30 may be manufactured from a polycarbonate (PC) or other suitable substrate material. The reflective moulding 30 is coated using a vacuum metallization process which provides a reflectivity of approximately 80%. Alternatively, the reflective moulding could be manufactured from a naturally reflective substrate such as white PC. The lens 100 may be manufactured from an acrylic (PMMA) or other suitable transparent or semi-transparent substrate, and would typically be 1-3 mm thick.

Figure 3 is a sectional view of the lamp assembly 10 illustrating recesses or pockets 32 formed in the reflective moulding 30 corresponding to upper and lower clearance lights. Each clearance light recess or pocket 32 has a rear wall 40 and upper and lower surfaces 33, 35 which project away from respective upper and lower edges of the rear wall 40 towards an opening of the recess 32 in the reflective moulding 30. The clearance light output is through the openings of upper and lower recesses 32. The upper and lower surfaces 33, 35 of each recess 32 act to concentrate the light output in a vertical plane. The effect of this concentration is that light exits from upper and lower recesses 32 in horizontal bands having a height substantially the same as the vertical spacing between upper and lower surfaces 33, 35.

Arranged in the housing 20 are upper and lower printed circuit boards (PCBs) 50, 60. Light emitting diode (LED) light sources for the clearance lights are mounted upon upper and lower PCBs 50, 60 respectively for corresponding upper and lower clearance lights of the lamp assembly 10.

With reference to Figure 4 there is shown a side view of the lamp assembly 10 with lens 100 removed for clarity to show the structure of the reflective moulding 30 in regions of the upper and lower clearance lights. Upper and lower recesses 32 are generally shown along with upper and lower rear walls 40 of each recess 32. In the embodiment shown in Figure 4, the rear wall of a given recess has two portions, a first rear wall 40 and a second rear wall 40'. These rear walls are from hereon referred to as reflectors as light emitted from LED light sources associated with the clearance lights is reflected off of these structures. First rear wall 40 is therefore a first reflector 40 and second rear wall 40' is therefore a second reflector 40'. As shown in Figure 4, each reflector 40, 40' has a plurality of reflective facets that extend vertically from the bottom of each reflector 40, 40' to the top of each reflector 40, 40' and span the length of the reflector 40, 40'.

The geometry of the clearance light reflectors 40, 40' is shown in more detail in Figure 5 which is a sectional view taken through section D-D of Figure 4. The following description is therefore in respect of either the upper or lower clearance light which have the same structure. The first reflector 40 has a proximal end 41 and a distal end 42 and a surface there between comprising a plurality of first reflective facets. The second reflector 40' has a proximal end 42 and distal end 42' and a surface there between comprised of a plurality of second reflective facets. Each reflector 40, 40' has a generally arcuate curvature between their respective first and distal ends. In the embodiment shown in Figure 5, the first and second reflectors 40, 40'are integral such that they converge together from their respective proximal ends 41, 4 Γ to their respective distal ends 42, 42'. In other forms, the first and second reflectors 40, 40' may be discrete elements.

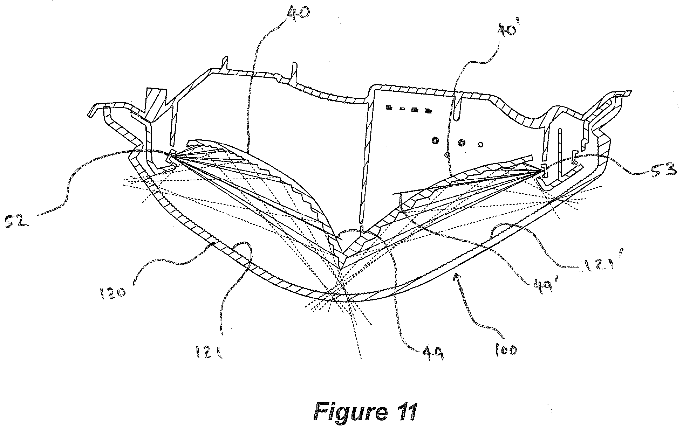

The clearance light LED light sources 52, 53 are shown in Figure 5 disposed near proximal ends 41, 4 Γ respectively of the first and second reflectors 40, 40' . Light source 52 is oriented to emit light onto the plurality of first reflective facets while light source 53 is oriented to emit light onto the plurality of second reflective facets. The light sources 52, 53 are oriented such that a central axis (zero degree axis) of each light source is disposed at an angle of approximately 90° to the direction of light that is output through lens 100. In the embodiment shown in Figure 5, the light sources 52, 53 are oriented such that the central axis is also oriented generally towards the center of or distal end of each reflector 40, 40'. This is more clearly shown in Figures 11, where the central axes 49 and 49' of the light sources 52 and 53 respectively are shown.

The reflective facets are now described in more detail with respect to Figures 6a-6b which provide enlarged views of the detail at E and F in Figure 5. In Figure 6a, light source 52 is shown emitting light rays 201, 202, 203 towards a reflective facet. The reflective facet comprises a curved surface forming a reflective face 43 which terminates in a ridge 44 and a straight angled surface 45 which extends from the ridge 44 towards a bottom or trough 46 of the reflective facet. As shown in Figure 6a, the light rays 201, 202, 203 are incident upon the curved reflective face 43 of the reflective facet which then reflects the light rays towards the inner surface 120 of the lens 100. The reflected light rays 20 , 202', 203' are spread in a horizontal plane by curved reflective face 43 of the reflective facet. The shape of curved reflective face 43 will determine how much incident light rays are spread in the horizontal plane. The straight angled surfaces 45' that extend between the ridge 44 and bottom 46 of adjacent curved faces 43 may be designed as shown such that incident light rays are aligned (collinear) with the angled surfaces 45'. Accordingly, light is not reflected from these angled surfaces 45'.

As shown in Figure 5, there are more reflective facets near end 41 of reflector 40 than near end 42. The distance (spacing or pitch) between adjacent reflective facets (for example between adjacent ridges 44) increases along the length of the reflector 40 proximal end. The curvature of curved reflective faces 43 of each reflective facet is varied as necessary to spread incident light over a large portion of the area of the lens 100. The curvature of each of the reflective faces is arranged to spread light over a majority of the inner surface of the lens such that the light reflected from the reflective faces overlaps. This creates multiple overlaps in illumination as is most clearly shown in Figure 11 and minimizes 'hot spots' or 'bright spots'.

Similar to Figure 6a, Figure 6b illustrates light source 53 emitting light rays 201, 202, 203 towards a reflective facet of reflector 40'. The reflective facet comprises a curved surface forming a reflective face 43' which terminates in a ridge 44' and a straight angled surface 45' which extends from the ridge 44' towards a bottom or trough 46' of the reflective facet. The light rays 201, 202, 203 are incident upon the curved face reflective 43 ' of the reflective facet which then reflects the light rays towards the inner surface 120 of the lens 100. The reflected light rays 202, 202', 203' are spread in a horizontal plane by curved reflective face 43 ' of the reflective facet. The shape of curved face 43 will determine how much incident light rays are spread in the horizontal plane. The straight angled surfaces 45' that extend between the ridge 44 and bottom 46 of adjacent curved reflective faces 43 may be designed as shown such that incident light rays are aligned (collinear) with the angled surfaces 45'. Accordingly, light is not reflected from these angled surfaces 45'. [0048] As described above, the light or luminous intensity across the viewing surface of the lens 100 can be made substantially uniform or even. The first and second reflectors 40, 40' shown in Figure 5 are asymmetrical and have a different arrangement of reflective facets. This is because the first and second reflectors 40, 40' are designed to aim light output in different directions.

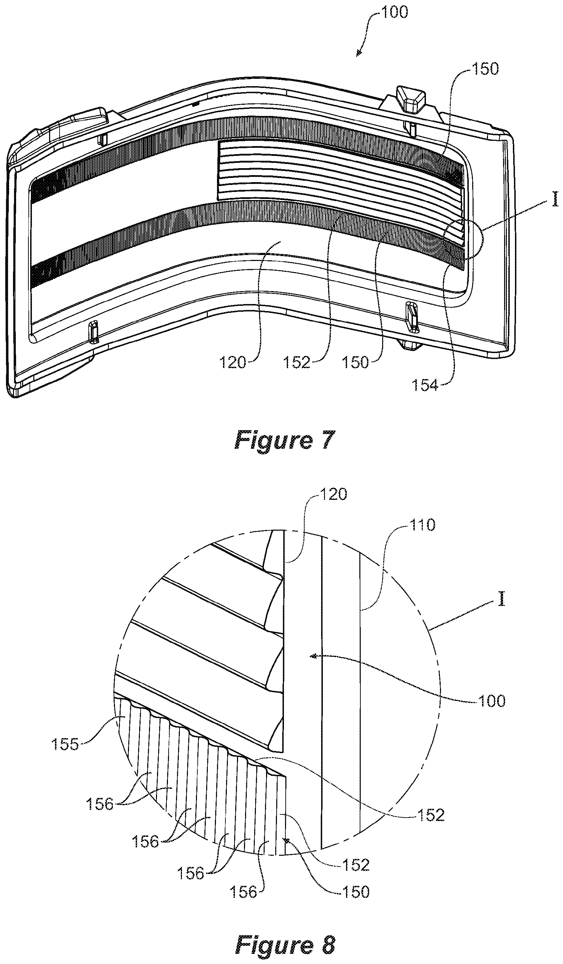

Referring now to Figures 7 and 8, the lens 100 is described in further detail. Figure 7 shows the rear (inner) surface 120 of the lens 100. The inner surface 120 comprises an upper and lower band of contoured surface optics 150 which are disposed in front of the clearance light recesses 32 of the reflective moulding 30 when the lamp assembly 10 is assembled together. The surface optics 150 have an upper end 152 and a lower end 154 that correspond in spacing to the upper and lower surfaces 33, 35 of a recess 32. A detailed view of the surface optics 150 is provided in Figure 8. The surface optics 150 have a waveform structure consisting of a plurality of peaks 156 and troughs 155 that extend vertically from upper end 152 to lower end 154. The waveform structure of the surface optics 150 functions to further spread light in the horizontal plane to assist in achieving a light output through the lens 100 of substantially uniform luminous intensity. The peaks and troughs of the surface optics are orientated substantially perpendicular to the walls 33, 35 of the recess 32.

Figure 11 shows first and second portions 121 and 12 Γ of the inner surface 120 of the lens 100. Each of the first reflective faces 43 have a curved surface configured to spread light towards a first portion 121 of the inner surface of the lens in a horizontal plane.

The curvature of each of the first reflective faces 43 is arranged to spread light over a majority of the first portion 121 of the inner surface of the lens 120 such that the light reflected from the first reflective faces 43 overlaps.

The arrangement described in the above two paragraphs also applies to the second reflective faces 43' and the corresponding second inner portions 12 Γ of the lens 100 as is clearly shown in Figure 11.

Embodiments of the lamp assembly of the present invention provide a light output over a surface having substantially uniform luminance (even brightness without hot spots) using one or more LED light sources. In other words, the lamp assembly is capable of producing a 'simulated light pipe' appearance without in fact using a light pipe.

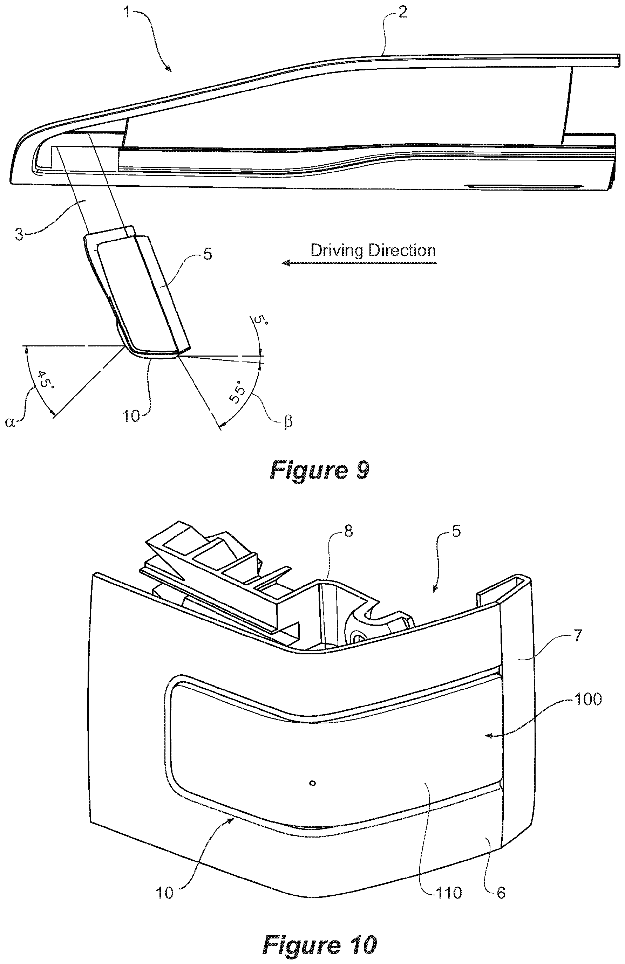

Figures 9 and 10 depict the lamp assembly 10 herein described integrated into an exterior rear view mirror assembly 5 of a vehicle 1. The mirror assembly 5 is mounted to a vehicle door 2 by a mirror arm 3 which extends from the side of the vehicle 1. The mirror assembly shown is on the left hand side of the vehicle. In an embodiment, the mirror assembly 5 may be mounted to the side of a truck (e.g. a light pickup truck or utility vehicle). The lamp assembly 10 shown in Figure 1 is integrated into the mirror assembly 5 and adapted to wrap around an outboard edge of the mirror assembly 5. In this way, the lamp assembly shown in Figure 1 is formed at an obtuse angle. Shown in Figure 2 are examples of light output areas α, β from the lamp assembly 10. Light output area a (a predetermined viewing angle) corresponds to the clearance light output from the lamp assembly 10 that is generally forward of the vehicle 1. As previously mentioned, the clearance light is for the purpose of delineating the width of the vehicle 1 for oncoming motorists. In a preferred form as shown, a=45° outward from the centerline of the vehicle. Figure 10 shows a perspective view of part of the mirror assembly 5 with the lamp assembly 10 mounted onto a mirror case frame 8. When installed, only the lens 100 is visible, the lens bordered by elements of the mirror casing 6, 7.

In addition to having a clearance light, the lamp assembly 10 may also have a turn signal lamp configured to provide light output generally rearward of the vehicle 1 in order to provide a visual indication to other road users that the vehicle 1 is turning. Light output area β corresponds to the turn signal light output from the lamp assembly 10. In a preferred form, β=55° from a line offset 5° from the centerline of the vehicle 1. The turn signal lamp will flash when activated and may be configured to flash simultaneously with the clearance light. The lamp assembly 10 may further include a ground illumination or 'camping' light configured to illuminate a ground segment adjacent the vehicle 1. The ground illumination lamp may illuminate an area approximately 3 m out from the side of the vehicle and is used for general illumination, such as when a user is setting up a camping site.

Throughout the specification and the claims that follow, unless the context requires otherwise, the words "comprise" and "include" and variations such as "comprising" and "including" will be understood to imply the inclusion of a stated integer or group of integers, but not the exclusion of any other integer or group of integers.

The reference to any prior art in this specification is not, and should not be taken as, an acknowledgement of any form of suggestion that such prior art forms part of the common general knowledge.

It will be appreciated by those skilled in the art that the invention is not restricted in its use to the particular application described. Neither is the present invention restricted in its preferred embodiment with regard to the particular elements and/or features described or depicted herein. It will be appreciated that the invention is not limited to the embodiment or embodiments disclosed, but is capable of numerous rearrangements, modifications and substitutions without departing from the scope of the invention as set forth and defined by the following claims.

## Claims

1. A lamp assembly (10) for a vehicle (1) including:
a housing (20),
a reflective moulding (30) mounted into the housing (20) and
a lens (100) external to the housing (20) covering the reflective moulding (30), with the lens (100) being connected or joined to the housing (20) and having an inner surface (120) and an outer surface (110) which provides a viewing surface that is illuminated by the lamp assembly (10) in use in a vehicle,
wherein
recesses (32) are formed in the reflective moulding (30) corresponding to upper and lower clearance lights,
each clearance light recess (32) has a rear wall (40, 40') and upper and lower surfaces (33, 35) act as parallel walls and project away from respective upper and lower edges of the rear wall (40, 40') towards an opening of the recess (32) in the reflective moulding (30),
the clearance light output is through the openings of upper and lower recesses (32),
the upper and lower surfaces (33, 35) of each recess (32) act to concentrate the light output in a vertical plane such that light exits from upper and lower recesses (32) in horizontal bands having a height substantially the same as the vertical spacing between upper and lower surfaces (33, 35), arranged in the housing (20) are upper and lower printed circuit boards (PCBs) (50, 60), light emitting diode (LED) light sources (52, 53) for the clearance lights are mounted upon the upper and lower PCBs (50, 60) respectively for corresponding upper and lower clearance lights of the lamp assembly (10),
the rear wall of a given recess (32) has two portions in form of a first rear wall acting as a first reflector (40) and a second rear wall acting as a second reflector (40') as light emitted from LED light sources (52, 53) associated with the clearance lights is reflected off of these structures, each reflector (40, 40') has a plurality of reflective facets that extend vertically from the bottom of each reflector (40, 40') to the top of each reflector (40, 40') and span the length of the reflector (40, 40'),
the first reflector (40) has a proximal end (41) and a distal end (42) and a surface therebetween comprising a plurality of first reflective facets,
the second reflector (40') has a proximal end (41') and distal end (42') and a surface therebetween comprised of a plurality of second reflective facets,
each reflector (40, 40') has a generally arcuate curvature between their respective first and distal ends (41, 42, 41', 42'), with the arc being generally concave,
the first and second reflectors (40, 40') are integral such that they converge together from their respective proximal ends (41, 41') to their respective distal ends (42, 42'),
the clearance light LED light sources (52, 53) are disposed near proximal ends (41, 41') respectively of the first and second reflectors (40, 40'),
the first light source (52) is oriented to emit light onto the plurality of first reflective facets while the second light source (53) is oriented to emit light onto the plurality of second reflective facets,
the light sources (52, 53) are oriented such that a central axis (zero degree axis) of each light source is disposed at an angle of approximately 90° to the direction of light that is output through lens (100),
the light or luminous intensity across the viewing surface of the lens (100) is substantially uniform or even as the first and second reflectors (40, 40') are asymmetrical and have a different arrangement of reflective facets such that the first and second reflectors (40, 40') are designed to aim light output in different directions, wherein, in use in the vehicle, light is output from the lens (100) with a substantially uniform luminance over a viewing angle of at least 45 degrees in a horizontal plane.

2. A lamp assembly of claim 1, wherein
the light sources (52, 53) are oriented such that the central axis is also oriented generally towards the centre of or distal end of each reflector (40, 40').

3. A lamp assembly of any one of the preceding claims, wherein
the inner surface (120) of the lens (100) comprises an upper and lower band of contoured surface optics (150) which are disposed in front of the clearance light recesses (32) of the reflective moulding (30) when the lamp assembly (10) is assembled together, and
the surface optics (150) have an upper end (152) and a lower end (154) that correspond in spacing to the upper and lower surfaces (33, 35) of a recess (32).

4. A lamp assembly of claim 3, wherein
the surface optics (150) have a waveform structure consisting of a plurality of peaks (156) and troughs (155) that extend vertically from upper end (152) to lower end (154),
the waveform structure of the surface optics (150) functions to further spread light in the horizontal plane to assist in achieving a light output through the lens (100) of substantially uniform luminous intensity, and
the peaks and troughs of the surface optics are orientated substantially perpendicular to the walls (33, 35) of the recess (32).

5. A lamp assembly of any one of the preceding claims, wherein
the first light source (52) emits light rays (201, 202, 203) towards the reflective facet of the first reflector (40),
the reflective facet comprises a curved surface forming the reflective face (43) which terminates in a ridge (44) and a straight angled surface (45) which extends from the ridge (44) towards a bottom or trough (46') of the reflective facet,
the light rays (201, 202, 203) are incident upon the curved face reflective (43) of the reflective facet which then reflects the light rays towards the inner surface (120) of the lens (100), and the reflected light rays (201', 202', 203') are spread in a horizontal plane by curved reflective face (43 ') of the reflective facet; and
the second light source (53) emits light rays (201, 202, 203) towards the reflective facet of the second reflector (40'),
the reflective facet comprises a curved surface forming the reflective face (43') which terminates in a ridge (44') and a straight angled surface (45') which extends from the ridge 44' towards a bottom or trough (46' )of the reflective facet,
the light rays (201, 202, 203) are incident upon the curved face reflective (43') of the reflective facet which then reflects the light rays towards the inner surface (120 )of the lens (100), and the reflected light rays (201', 202', 203') are spread in a horizontal plane by curved reflective face (43 ') of the reflective facet.

6. A lamp assembly of claim 5, wherein
first and second portions (121, 121') of the inner surface (120) of the lens (100) are provided, and each of the first reflective faces (43) have a curved surface configured to spread light towards a first portion (121) of the inner surface (120) of the lens (100) in a horizontal plane, and
the curvature of each of the first reflective faces (43) is arranged to spread light over a majority of the first portion (121) of the inner surface (120) of the lens (100) such that the light reflected from the first reflective faces (43) overlaps, and
the arrangement described with respect to the first reflective faces (43) also applies to the second reflective faces (43') and the corresponding second inner portions (121') of the lens (100).

7. An exterior rear view mirror assembly (5) of a vehicle (1), which is configured to be mounted to a vehicle door (2) by a mirror arm (3) which extends from the side of the vehicle (1), wherein the lamp assembly (10) of any one of the claims 1 to 6 is integrated into the mirror assembly (5) and adapted to wrap around an outboard edge of the mirror assembly (5) such that the lamp assembly (10) is formed at an obtuse angle.

8. An exterior rear view mirror assembly of claim 7, wherein
a light output area of the lamp assembly (10) corresponds to the clearance light output from the lamp assembly (10) that is generally forward of the vehicle (1).

## Patentansprüche

1. Beleuchtungsanordnung (10) für ein Fahrzeug (1), umfassend:
ein Gehäuse (20),
einen reflektiven Formkörper (30), der in dem Gehäuse (20) montiert ist, und eine Linse (100) außerhalb des Gehäuses (20), die den reflektiven Formkörper (30) bedeckt, wobei die Linse (100) mit dem Gehäuse (20) verbunden oder zusammengefügt ist und eine Innenfläche (120) und eine Außenfläche (110) aufweist, die eine Sichtfläche bereitstellt, die von der Beleuchtung (10) beleuchtet wird, die in einem Fahrzeug im Einsatz ist,
wobei
in dem reflektiven Formkörper (30) Aussparungen (32) ausgebildet sind, die oberen und unteren Begrenzungslichtern entsprechen,
jede Begrenzungslichtaussparung (32) eine Rückwand (40, 40') aufweist und obere und untere Oberflächen (33, 35) als Parallelwände fungieren und von jeweiligen oberen und unteren Rändern der Rückwand (40, 40') weg in Richtung einer Öffnung der Aussparung (32) in dem reflektiven Formkörper (30) vorstehen, die Begrenzungslichtausgabe durch die Öffnungen von oberen und unteren Aussparungen (32) erfolgt,
die oberen und unteren Oberflächen (33, 35) jeder Aussparung (32) derart wirken, dass sie die Lichtausgabe in einer vertikalen Ebene konzentrieren, sodass Licht von oberen und unteren Aussparungen (32) in horizontalen Streifen austritt, die eine Höhe aufweisen, die im Wesentlichen dem vertikalen Abstand zwischen den oberen und unteren Oberflächen (33, 35) entspricht,
in dem Gehäuse (20) obere und untere Leiterplatten (*printed circuit boards,* PCBs) (50, 60) angeordnet sind,
jeweils Leuchtdioden-(LED-)Lichtquellen (52, 53) für die Begrenzungslichter an die oberen und unteren PCBs (50, 60) montiert sind, um oberen und unteren Begrenzungslichter der Beleuchtungsanordnung (10) zu entsprechen,
die Rückwand einer gegebenen Aussparung (32) zwei Abschnitte in Form einer ersten Rückwand, die als ein erster Reflektor (40) fungiert, und einer zweiten Rückwand aufweist, die als ein zweiter Reflektor (40') fungiert, wenn Licht, das von LED-Lichtquellen (52, 53), die den Begrenzungslichtern zugeordnet sind,
von diesen Strukturen reflektiert wird,
jeder Reflektor (40, 40') eine Mehrzahl von reflektiven Facetten aufweist, die sich vertikal von dem Boden jedes Reflektors (40, 40') bis zu der Oberseite jedes Reflektors (40, 40') erstrecken und die Länge des Reflektors (40, 40') überspannen,
der erste Reflektor (40) ein proximales Ende (41) und ein distales Ende (42) und eine Oberfläche dazwischen aufweist, die eine Mehrzahl von ersten reflektiven Facetten umfasst,
der zweite Reflektor (40') ein proximales Ende (41') und ein distales Ende (42') und eine Oberfläche dazwischen aufweist, die eine Mehrzahl von zweiten reflektiven Facetten umfasst,
jeder Reflektor (40, 40') eine im Wesentlichen bogenförmige Krümmung zwischen seinem jeweiligen ersten und distalen Ende (41, 42, 41', 42') aufweist, wobei der Bogen im Wesentlichen konkav ist,
der erste und der zweite Reflektor (40, 40') einstückig sind, sodass sie von ihrem jeweiligen proximalen Ende (41, 41') zu ihrem jeweiligen distalen Ende (42, 42') zusammenlaufen,
die Begrenzungslichter-LED-Lichtquellen (52, 53) jeweils in der Nähe von proximalen Enden (41, 41') des ersten und zweiten Reflektors (40, 40') angeordnet sind,
die erste Lichtquelle (52) derart ausgerichtet ist, dass sie Licht auf die Mehrzahl von ersten reflektiven Facetten abgibt, während die zweite Lichtquelle (53) derart ausgerichtet ist, dass sie Licht auf die Mehrzahl von zweiten reflektiven Facetten abgibt,
die Lichtquellen (52, 53) derart ausgerichtet sind, dass eine Mittelachse (NullGrad-Achse) jeder Lichtquelle in einem Winkel von etwa 90° zu der Richtung des Lichts angeordnet ist, das durch die Linse (100) ausgegeben wird,
das Lich oder die Lichtstärke über die gesamte Sichtfläche der Linse (100) im Wesentlichen einheitlich oder gleichmäßig ist, da der erste und zweite Reflektor (40, 40') asymmetrisch sind und eine unterschiedliche Anordnung von reflektiven Facetten aufweisen, sodass der erste und zweite Reflektor (40, 40') derart gestaltet sind, dass sie Lichtausgabe in unterschiedliche Richtungen richten, wobei, im Einsatz im Fahrzeug, Licht mit einer im Wesentlichen einheitlichen Leuchtdichte über einen Betrachtungswinkel von mindestens 45 Grad in einer horizontalen Ebene aus der Linse (100) ausgegeben wird.

2. Beleuchtungsanordnung nach Anspruch 1, wobei
die Lichtquellen (52, 53) derart ausgerichtet sind, dass die Mittelachse außerdem im Wesentlichen in Richtung der Mitte oder des distalen Endes jedes Reflektors (40, 40') ausgerichtet ist.

3. Beleuchtungsanordnung nach einem der vorangehenden Ansprüche, wobei
die Innenfläche (120) der Linse (100) einen oberen und unteren Streifen mit konturierter Oberflächenoptik (150) umfasst, die vor den Begrenzungslichtaussparungen (32) des reflektiven Formkörpers (30) angeordnet sind, wenn die Beleuchtung (10) zusammengebaut ist, und
die Oberflächenoptik (150) ein oberes Ende (152) und ein unteres Ende (154) aufweist, die in ihren Abständen der oberen und unteren Oberfläche (33, 35) einer Aussparung (32) entsprechen.

4. Beleuchtungsanordnung nach Anspruch 3, wobei
die Oberflächenoptik (150) eine Wellenformstruktur aufweist, die aus einer Mehrzahl von Peaks (156) und Tälern (155) besteht, die sich vertikal vom oberen Ende (152) zum unteren Ende (154) erstrecken,
die Wellenformstruktur der Oberflächenoptik (150) ferner derart wirkt, dass Licht weiter in der horizontalen Ebene verbreitet wird, um zu der Erzielung einer Lichtausgabe durch die Linse (100) von im Wesentlichen einheitlicher Lichtstärke beizutragen, und
die Peaks und Täler der Oberflächenoptik im Wesentlichen senkrecht zu den Wänden (33, 35) der Aussparung (32) angeordnet sind.

5. Beleuchtungsanordnung nach einem der vorangehenden Ansprüche, wobei
die erste Lichtquelle (52) Lichtstrahlen (210, 202, 203) in Richtung der reflektiven Facette des ersten Reflektors (40) abgibt,
die reflektive Facette eine gebogene Oberfläche, die die reflektive Fläche (43) ausbildet, die in einem Grat (44) endet, und eine Oberfläche (45) mit einem gestreckten Winkel umfasst, die sich von dem Grat (44) in Richtung eines Bodens oder Tals (46') der reflektiven Facette erstreckt,
die Lichtstrahlen (201, 202, 203) auf die gebogene reflektive Fläche (43) der reflektiven Facette fallen, die dann die Lichtstrahlen in Richtung der Innenfläche (120) der Linse (100) reflektiert, und
die reflektierten Lichtstrahlen (201', 202', 203') von der gebogenen reflektiven Fläche (43') der reflektiven Facette in einer horizontalen Ebene verbreitet werden; und
die zweite Lichtquelle (53) Lichtstrahlen (201, 202, 203) in Richtung der reflektiven Facette des zweiten Reflektors (40') abgibt,
die reflektive Facette eine gebogene Oberfläche, die die reflektive Fläche (43') ausbildet, die in einem Grat (44') endet, und eine Oberfläche (45') mit einem gestreckten Winkel umfasst, die sich von dem Grat (44') in Richtung eines Bodens oder Tals (46') der reflektiven Facette erstreckt,
die Lichtstrahlen (201, 202, 203) auf die gebogene reflektive Fläche (43') der reflektiven Facette fallen, die dann die Lichtstrahlen in Richtung der Innenfläche (120) der Linse (100) reflektiert, und
die reflektierten Lichtstrahlen (201', 202', 203') von der gebogenen reflektiven Fläche (43') der reflektiven Facette in einer horizontalen Ebene verbreitet werden.

6. Beleuchtungsanordnung nach Anspruch 5, wobei
erste und zweite Abschnitte (121, 121') der Innenfläche (120) der Linse (100) vorgesehen sind und jede der ersten reflektiven Flächen (43) eine gebogene Oberfläche aufweist, die dazu ausgestaltet ist, in einer horizontalen Ebene Licht in Richtung eines ersten Abschnitts (121) der Innenfläche (120) der Linse (100) zu verbreiten, und
die Krümmung jeder der ersten reflektiven Flächen (43) derart angeordnet ist, dass sie Licht über einen Großteil des ersten Abschnitts (121) der Innenfläche (120) der Linse (100) verbreitet, sodass das Licht, das von den ersten reflektiven Flächen (43) reflektiert wird, überlappt, und
die in Bezug auf die ersten reflektiven Flächen (43) beschriebene Anordnung auch für die zweiten reflektiven Flächen (43') und die entsprechenden zweiten Innenabschnitte (121') der Linse (100) gilt.

7. Außenrückspiegelanordnung (5) eines Fahrzeugs (1), die dazu ausgestaltet ist, mittels eines Spiegelarms (3), der sich von der Seite des Fahrzeugs (1) erstreckt, an eine Fahrzeugtür (2) montiert zu werden, wobei die Beleuchtungsanordnung (10) nach einem der Ansprüche 1 bis 6 in die Spiegelanordnung (5) integriert ist und dazu ausgelegt ist, eine Außenkante der Spiegelanordnung (5) zu umgreifen, sodass die Beleuchtungsanordnung (10) in einem stumpfen Winkel ausgebildet ist.

8. Außenrückspiegelanordnung nach Anspruch 7, wobei ein Lichtausgabebereich der Beleuchtungsanordnung (10) der Begrenzungslichtausgabe von der Beleuchtungsanordnung (10) entspricht, die sich im Wesentlichen vor dem Fahrzeug (1) befindet.

## Revendications

1. Assemblage de lampe (10) pour un véhicule (1) comportant :
un boîtier (20),
une pièce moulée réfléchissante (30) montée dans le boîtier (20) et
une lentille (100) extérieure au boîtier (20) recouvrant la pièce moulée réfléchissante (30), la lentille (100) étant raccordée ou jointe au boîtier (20) et présentant une surface intérieure (120) et une surface extérieure (110) qui fournit une surface de vision qui est éclairée par le assemblage de lampe (10) utilisé dans un véhicule,
dans lequel
des évidements (32) sont formés dans la pièce moulée réfléchissante (30),
correspondant à des feux de gabarit supérieur et inférieur,
chaque évidement (32) de feu de gabarit présente une paroi arrière (40, 40') et des surfaces supérieure et inférieure (33, 35) font office de parois parallèles et font saillie depuis des bords supérieur et inférieur respectifs de la paroi arrière (40, 40') vers une ouverture de l'évidement (32) dans la pièce moulée réfléchissante (30),
la sortie de feu de gabarit se fait à travers les ouvertures des évidements supérieur et inférieur (32),
les surfaces supérieure et inférieure (33, 35) de chaque évidement (32) agissent pour concentrer la sortie de lumière dans un plan vertical de telle sorte que de la lumière sort des évidements (32) supérieur et inférieur en bandes horizontales présentant une hauteur sensiblement égale à l'espacement vertical entre les surfaces supérieure et inférieure (33, 35),
des cartes de circuit imprimé (PCB) (50, 60) supérieure et inférieure sont agencées dans le boîtier (20),
des sources de lumière (52, 53) à diode électroluminescente (DEL) pour les feux de gabarit sont montées respectivement sur les cartes de circuit imprimé (50, 60) supérieure et inférieure pour des feux de gabarit supérieur et inférieur correspondants du assemblage de lampe (10),
la paroi arrière d'un évidement (32) donné présente deux parties sous la forme d'une première paroi arrière faisant office de premier réflecteur (40) et d'une seconde paroi arrière faisant office de second réflecteur (40') lorsque de la lumière émise par des sources de lumière (52, 53) à DEL associées aux feux de gabarit est réfléchie par ces structures,
chaque réflecteur (40, 40') présente une pluralité de facettes réfléchissantes qui s'étendent verticalement du bas de chaque réflecteur (40, 40') au haut de chaque réflecteur (40, 40') et couvrent la longueur du réflecteur (40, 40'),
le premier réflecteur (40) présente une extrémité proximale (41) et une extrémité distale (42) et une surface entre celles-ci comprenant une pluralité de premières facettes réfléchissantes,
le second réflecteur (40') présente une extrémité proximale (41') et une extrémité distale (42') et une surface entre celles-ci comprenant une pluralité de secondes facettes réfléchissantes,
chaque réflecteur (40, 40') présente une courbure globalement arquée entre sa première extrémité et son extrémité distale (41, 42, 41', 42') respectives, l'arc étant globalement concave,
les premier et second réflecteurs (40, 40') sont en une seule pièce, de telle sorte qu'ils convergent l'un vers l'autre de leur extrémité proximale (41, 41') respective à leur extrémité distale (42, 42') respective,
les sources de lumière (52, 53) à DEL des feux de gabarit sont disposées près des extrémités proximales (41, 41') respectivement des premier et second réflecteurs (40, 40'),
la première source de lumière (52) est orientée pour émettre de la lumière sur la pluralité de premières facettes réfléchissantes tandis que la seconde source de lumière (53) est orientée pour émettre de la lumière sur la pluralité de secondes facettes réfléchissantes, les sources de lumière (52, 53) sont orientées de telle sorte qu'un axe central (axe à zéro degré) de chaque source de lumière est disposé selon un angle d'approximativement 90° par rapport à la direction de la lumière qui est émise à travers la lentille (100),
la lumière ou l'intensité lumineuse à travers la surface de vision de la lentille (100) est sensiblement uniforme ou homogène lorsque les premier et second réflecteurs (40, 40') sont asymétriques et présentent un agencement différent de facettes réfléchissantes de telle sorte que les premier et second réflecteurs (40, 40') sont conçus pour orienter l'émission de la lumière dans différentes directions, dans lequel, lors de l'utilisation dans le véhicule, de la lumière est émise depuis la lentille (100) avec une luminance sensiblement uniforme sur un angle de vision d'au moins 45 degrés dans un plan horizontal.

2. Assemblage de lampe selon la revendication 1, dans lequel les sources de lumière (52, 53) sont orientées de telle sorte que l'axe central est également orienté globalement vers le centre ou l'extrémité distale de chaque réflecteur (40, 40').

3. Assemblage de lampe selon l'une quelconque des revendications précédentes, dans lequel
la surface intérieure (120) de la lentille (100) comprend une bande supérieure et inférieure d'éléments optiques de surface (150) modelés qui sont disposés en face des évidements (32) des feux de gabarit de la pièce moulée réfléchissante (30) quand le assemblage de lampe (10) est assemblé, et
les éléments optiques de surface (150) présentent une extrémité supérieure (152) et une extrémité inférieure (154) dont l'espacement correspond aux surfaces supérieure et inférieure (33, 35) d'un évidement (32).

4. Assemblage de lampe selon la revendication 3, dans lequel
les éléments optiques de surface (150) présentent une structure ondulée consistant en une pluralité de sommets (156) et de creux (155) qui s'étendent verticalement de l'extrémité supérieure (152) à l'extrémité inférieure (154),
la structure ondulée des éléments optiques de surface (150) fonctionne de façon à propager davantage la lumière dans le plan horizontal pour aider à obtenir une sortie de lumière à travers la lentille (100) ayant une intensité lumineuse sensiblement uniforme, et
les sommets et les creux des éléments optiques de surface sont orientés sensiblement perpendiculairement aux parois (33, 35) de l'évidement (32).

5. Assemblage de lampe selon l'une quelconque des revendications précédentes, dans lequel
la première source de lumière (52) émet des rayons lumineux (201, 202, 203) vers la facette réfléchissante du premier réflecteur (40),
la facette réfléchissante comprend une surface incurvée formant la face réfléchissante (43) qui se termine en une arête (44) et une surface à angle plat (45) qui s'étend de l'arête (44) vers un fond ou creux (46') de la facette réfléchissante,
les rayons lumineux (201, 202, 203) rencontrent la face réfléchissante (43) incurvée de la facette réfléchissante qui réfléchit ensuite les rayons lumineux vers la surface intérieure (120) de la lentille (100), et les rayons lumineux réfléchis (201', 202', 203') sont propagés dans un plan horizontal par la face réfléchissante (43') incurvée de la facette réfléchissante ; et
la seconde source de lumière (53) émet des rayons lumineux (201, 202, 203) vers la facette réfléchissante du second réflecteur (40'),
la facette réfléchissante comprend une surface incurvée formant la face réfléchissante (43') qui se termine en une arête (44') et une surface à angle plat (45') qui s'étend de l'arête (44') vers un fond ou creux (46') de la facette réfléchissante,
les rayons lumineux (201, 202, 203) rencontrent la face réfléchissante (43') incurvée de la facette réfléchissante qui réfléchit ensuite les rayons lumineux vers la surface intérieure (120) de la lentille (100), et les rayons lumineux réfléchis (201', 202', 203') sont propagés dans un plan horizontal par la face réfléchissante (43') incurvée de la facette réfléchissante.

6. Assemblage de lampe selon la revendication 5, dans lequel
une première et une seconde partie (121, 121') de la surface intérieure (120) de la lentille (100) sont prévues, et chacune des premières faces réfléchissantes (43) présente une surface incurvée conçue pour propager de la lumière vers une première partie (121) de la surface intérieure (120) de la lentille (100) dans un plan horizontal, et
la courbure de chacune des premières faces réfléchissantes (43) est agencée pour propager de la lumière sur une majeure partie de la première partie (121) de la surface intérieure (120) de la lentille (100) de telle sorte que la lumière réfléchie par les premières faces réfléchissantes (43) se chevauche, et
l'agencement décrit en rapport avec les premières faces réfléchissantes (43) s'applique également aux secondes faces réfléchissantes (43') et aux secondes parties intérieures (121') correspondantes de la lentille (100).

7. Ensemble rétroviseur extérieur (5) d'un véhicule (1), qui est conçu pour être monté sur une portière de véhicule (2) par le biais d'un bras de rétroviseur (3) qui s'étend depuis le côté du véhicule (1), le assemblage de lampe (10) selon une des revendications 1 à 6 étant intégré dans l'ensemble rétroviseur (5) et adapté pour s'envelopper autour d'un bord extérieur de l'ensemble rétroviseur (5) de telle sorte que le assemblage de lampe (10) est formé à un angle obtus.

8. Ensemble rétroviseur extérieur selon la revendication 7, dans lequel une zone de sortie de la lumière du assemblage de lampe (10) correspond à la sortie de feu de gabarit du assemblage de lampe (10) qui se fait globalement vers l'avant du véhicule (1).
